# EUROPEAN PATENT APPLICATION

(11) **EP 1 271 425 A2**
(43) Date of publication of application: **02.01.2003**
(21) Application number: 02013157.9
(22) Date of filing: 14.06.2002
(51) Int. Cl.: G07D 11/00

(54) **Bill handling machine**

(30) Priority: 21.06.2001 JP 2001187508
(71) Applicant: Hitachi, Ltd., Chiyoda-ku, Tokyo 101-8010 (JP)
(72) Inventor: Uozumi, Atsuko, Hitachi, Ltd., Tokyo 100-8220 (JP); Kadowaki, Minoru, Hitachi, Ltd., Tokyo 100-8220 (JP)
(74) Representative: Strehl Schübel-Hopf & Partner

(57) **Abstract**

The object of this invention is providing a bill handling machine in which the delivery order can be flexibly changed. A delivery order setting table 108 which stores the delivery order for each bill-cassette is installed in a bill handling machine 10. The bill handling machine 10 receives a withdrawal instruction including the number of bills to be delivered for each denomination from an upper apparatus ATM. The bill handling machine 10 specifies the delivery order and the number of bills by referring to the delivery order setting table 108 and a bill-cassette setting table 107, which stores the denomination of each bill-cassette, according to the withdrawal instruction, and delivers the bills. The delivery order can be easily changed by changing the setting of the delivery order setting table 108.

## Description

### BACKGROUND OF THE INVENTION

### Field of the Invention

This invention generally relates to a bill handling machine which withdraws and delivers bank notes (hereafter "bills"), more particularly this invention relates to a bill delivery control in the same.

### Description of the Related Art

In various financial institutions, automatic teller machines (hereafter referred to as "ATM") are used for deposits and withdrawals of bills for their customers. A bill handling machine is installed in the ATM to carry out the receiving, storing, and dispensing of the bill. The bill handling machine extracts bills from bill-cassettes and delivers the bills to an insertion-delivery opening, or a dispenser slot, according to an instruction from a controller unit of the ATM.

While the delivery order or sequence of the bills of several denominations is typically fixed, some machines can change the delivery order. For instance, a paper money processor disclosed in JP10-49720A can switch-over two modes of the delivery, the first mode being a 'low-value-bill-top mode' by which the bills are delivered to be stacked such that the lowest value bill is at the top and the highest value bill is at the bottom, the second mode being a 'high-value-bill-top mode' by which the delivery is carried out in the opposite order of the 'low-value-bill-top mode'. Various delivery modes prepared in advance will meet various requests from upstream controllers such as the controller unit of the ATM and other external controllers.

### SUMMARY OF THE INVENTION

It has been, however, difficult to change the delivery order of bills flexibly in the conventional bill handling machines. Bills are greatly different in their denominations and sizes in different countries. The currency to be stored in the cassettes of a bill handling machine must be changed according to its target customers. These varieties cause various requests for the delivery order of the bill, like the order of value or size of the bill. To meet all these requests, a conventional bill handling machine requires a lot of preset delivery modes corresponding to all possible requests, or replacement of the control program for controlling the delivery. Consequently, various requests for the delivery order of the bill have been hard to be satisfied with the conventional machines.

An object of this invention is to provide a bill handling machine which can attain flexible changes of the bill delivery order.

According to a first aspect of the present invention, there is provided a bill handling machine in which a relation between bill-cassettes and a bill delivery order is changeable through an external command or instruction. The bill handling machine includes a delivery controller to control the delivery of bills based on the relation according to a withdrawal instruction. The denomination of bills stored in each bill-cassette is separately managed as a bill-cassette setting. The delivery controller delivers bills based on the relation, the bill-cassette setting, and the withdrawal instruction. For instance, the delivery controller specifies bill-cassettes from which the bills are delivered according to the delivery order provided by the relation, specifies the denomination stored in the bill-cassette based on the bill-cassette setting, and delivers the bills specified by the withdrawal instruction.

Externally setting the relation enables the bill handling machine of this invention to change the delivery order flexibly.

In this invention, the withdrawal instruction might include the amount of money to be delivered, and also might include the number of bills of each denomination. In the former case, the delivery controller can set the denomination and the number of bills to be delivered according to the amount of money.

The relation to specify the delivery order can be set in various manners. In the first manner, the delivery order can be directly related to each bill-cassette. Directly related them, the delivery control can be simplified in this manner.

In the second manner, the relation can be defined by using a delivery denomination setting which associates the delivery order and the denomination. Thus, the order is respectively set for denominations. In this manner, the delivery denomination setting can be set through an external command or operation.

In the second manner, the delivery order of each bill-cassette can be indirectly defined by specifying the order of each denomination because each bill-cassette stores one kind of denomination. This enables the delivery order can be easily set according to the denomination. For instance, the settings, such as the delivery order according to the amount of money and the delivery order according to the size of bills, can be easily set.

In the second manner, two or more bill-cassettes might be treated as one group when two or more bill-cassettes store the same denomination. The second manner enables the setting of the delivery order in such a case to be simplified. Of course, it is also possible to add a priority of the delivery in two or more bill-cassettes storing the same denomination.

In the third manner, the relation might by generated in the bill handling machine. In this manner, the rule for deciding the delivery order is set based on a prescribed parameter relating to the bills through an external command or operation. The number of bills, the size of bills, the amount of money, and the number of the bills to be delivered, for instance, can be used as a parameter. The bill handling machine gets this parameter of bills stored in each bill-cassette, and generates the relation with the application of the rule based on this parameter. For instance, when the size of bill is assumed to be the parameter, and the rule "larger to smaller" is set, the relation between each bill-cassette and the delivery order can be generated so that the larger bills are delivered on the top. In the third manner, the required delivery order can be easily achieved by setting the rule corresponding to the request.

In the third manner, when a discrimination unit which discriminates the bills is installed in the bill handling machine, the parameter might be got from a discrimination result output from the discrimination unit, not only be separately input. This can reduce the workload for getting the parameter and setting the relation.

This invention also discloses a bill handling machine of the second construction which inputs a withdrawal instruction for instructing the denomination and the number of bills to be delivered associated with the delivery order, and delivers the bills based on the instruction. In the second construction, a teller machine as an upper apparatus of the bill handling machine sets the denomination and the number of bills to be delivered based on the amount of money to be withdrawn, relates these settings to the delivery order, and sends them to the bill handling machine. These bill handling machine and teller machine can flexibly control the delivery order because the withdrawal instruction contains the denomination and the delivery order.

This invention of both the 1st and the 2nd construction preferably includes a discrimination unit and a detection unit further. The discrimination unit discriminates the bills delivered from bill-cassettes. The detection unit detects inconsistency of the withdrawal instruction and the actual delivery based on the discrimination result. Even if the bill-cassette setting or the delivery order of the bills is wrong, the detection unit can be detect it.

After inconsistency is detected, various operation might be taken. For instance, informing of the inconsistency or stopping the delivery might be acceptable. Either way can inform the irregularity and inhibit wrong deliveries.

Moreover, automatic correction of the bill-cassette setting can be acceptable when the inconsistency is detected. For instance, the correction is achieved by associating the actual denomination of the bill with the bill-cassette from which the bill of the inconsistency is delivered. This realises a quick restorer after the inconsistency is detected.

This invention can not be limited to the bill handling machine mentioned above and be constructed in various manner. For instance, this invention can be constructed as a delivery control method to control delivery of bills in a bill handling machine. The other applications also include computer programs that cause the computer to attain these methods, a diversity of signals equivalent to the computer programs, and recording media in which such computer programs are recorded. Typical examples of the recording media include flexible disks, CD-ROMs, magneto-optic discs, IC cards, ROM cartridges, punched cards, prints with bar-codes or other codes printed thereon, internal storage devices (memories like a RAM and a ROM) and external storage devices of the computer, and a variety of other computer readable media.

### BRIEF DESCRIPTION OF THE DRAWINGS

Figure 1 is a perspective view of an automatic teller machine as the first embodiment of the present invention;
Figure 2 is a cross sectional side view of the bill handling machine;
Figure 3 is a block diagram of the ATM and the bill handling machine;
Figure 4 is a flow chart of the bill delivery process;
Figure 5 illustrates how to change the delivery order;
Figure 6 shows the modification of the delivery order setting table;
Figure 7 is a flow chart of the modified bill delivery process;
Figure 8 is a flow chart of the delivery order setting process;
Figure 9 is a block diagram of the ATM and the bill handling machine in the second embodiment; and
Figure 10 is a flow chart of the bill delivery process in the second embodiment.

### DESCRIPTION OF THE PREFERRED EMBODIMENTS

### A. The first embodiment:

### A1. General construction:

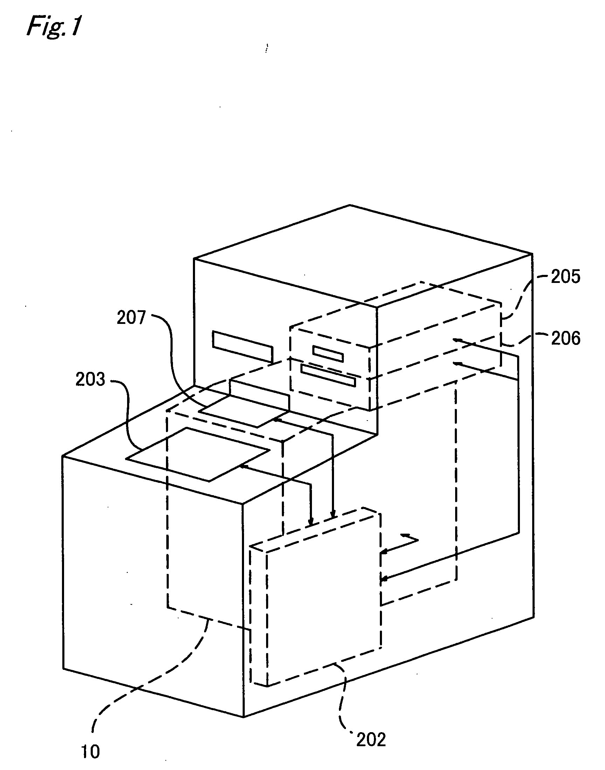

Figure 1 shows a general construction of an automatic teller machine as the first embodiment of the present invention. The automatic teller machine is set up in a bank, for example, and automatically executes deposition-withdrawal process according to the operation by the customer.

The automatic teller machine in this embodiment (hereafter referred to as "ATM") includes the following units illustrated in the figure. A card handling mechanism 205 reads out recorded information on a magnetic stripe card, such as a cash card or an identification card. For instance, customer's account number and personal identification number and such are included in the information recorded on the card.

An operation panel 203 is a user interface for displaying the information for transactions of bills and inputting instructions for deposits and withdrawals. In this embodiment, a touch panel is used for the operation panel 203, but the combination of a display and push-button switches are also acceptable. In this embodiment, as described later, the operation panel 203 functions as an interface by which the delivery order of the bills in the bill handling machine 10 is set.

The bills are put in and out through an insert-delivery opening 207 according to customer operations. During a depositing operation, the bills which the customer put into the insert-delivery opening 207 are identified , classified into respective denominations, and stored in the bill handling machine 10. During a withdrawal operation, the bill handling machine 10 prepares the bills corresponding to the amount of money specified by the customer, and delivers them to the customer through the insert-delivery opening 207. An account sheet issue mechanism 206 issues an account sheet on which the result of the transaction is recorded.

Various units, not limited to those illustrated here, can be installed in the ATM. For instance, a unit for handling bankbooks can be installed in addition to the above-mentioned units.

A control unit 202 controls the operations of each unit in the ATM. Control unit 202 is implemented by a microcomputer having CPU and memories. The control unit 202 communicates information with each unit and controls the operation of the entire ATM.

### A2. Bill handling machine:

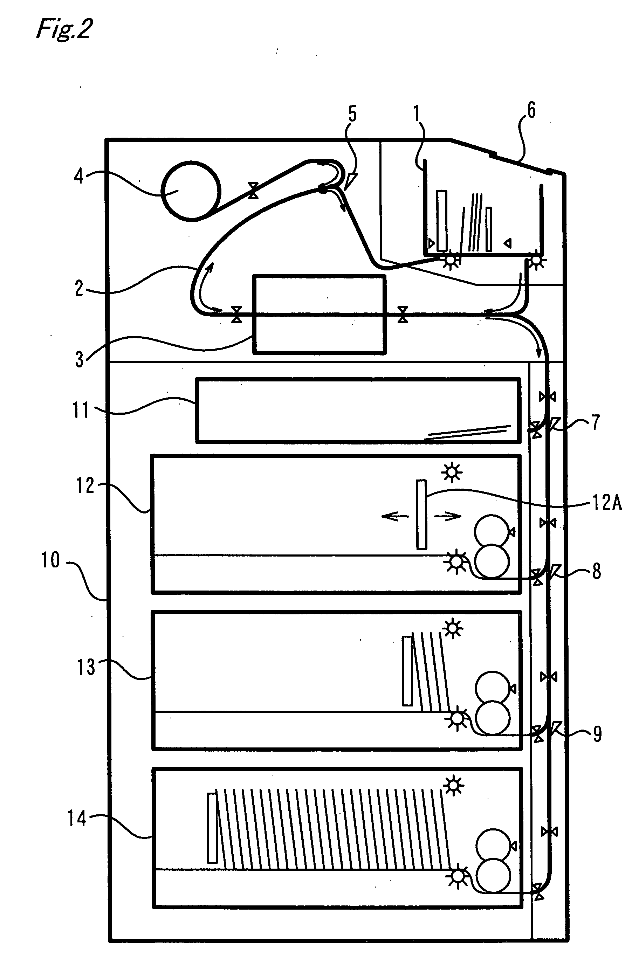

Figure 2 is a cross sectional side view of the bill handling machine 10. A stacker 1 is a box for the customer to put in and out the bills. A shutter 6 is installed at the top of the stacker 1. This shutter 6 automatically opens and shuts in synchronism with the insert-delivery opening 207 of the ATM.

Several kinds of bill-cassettes are set in the bill handling machine 10: bill-cassettes 12-14 store normal bills (hereafter referred to as "regular bills") which can be put in circulation; reject-box 11 stores the bills discriminated as irregular ones (hereafter referred to as "rejected bills" ); and a temporary bill-cassette 4 temporarily stores bills in the transportation process described later. The denomination to be stored in each bill-cassette is predetermined. A movable pushing partition 12A is installed in the bill-cassette 12 to maintain bills in an appropriately stacked arrangement. Similar pushing partitions are also installed in other bill-cassettes 13 and 14.

Bills are transported by a conveyer 2 between the stacker 1 and each bill-cassette. The conveyer 2 is a mechanism to transport bills by using a conveyance mechanism, such as rollers and belts. Gates to switch the destination of the bills are installed on the conveyer 2. Gate 5 switches the destination between the temporary bill-cassette 4 and the stacker 1. Gate 7 switches the destination to the reject-box 11. Gates 8 and 9 switch the destination to one of the bill-cassettes 12-14.

A discrimination unit 3 is installed on the conveyer 2. The discrimination unit 3 discriminates bills with an optical or other kind of sensors, and output the results. The denomination of the bills, such as \10,000, \5,000, and \1,000 in the case of Japanese currency, is included in the discrimination result. The size of the bill along with the denomination can be included in the discrimination result.

The control unit (not shown) is installed in the bill handling machine 10. The control unit is implemented by a microcomputer having CPU and a memory, and controls the operation of the bill handling machine 10 according to the control program installed in advance.

### A3. Control blocks:

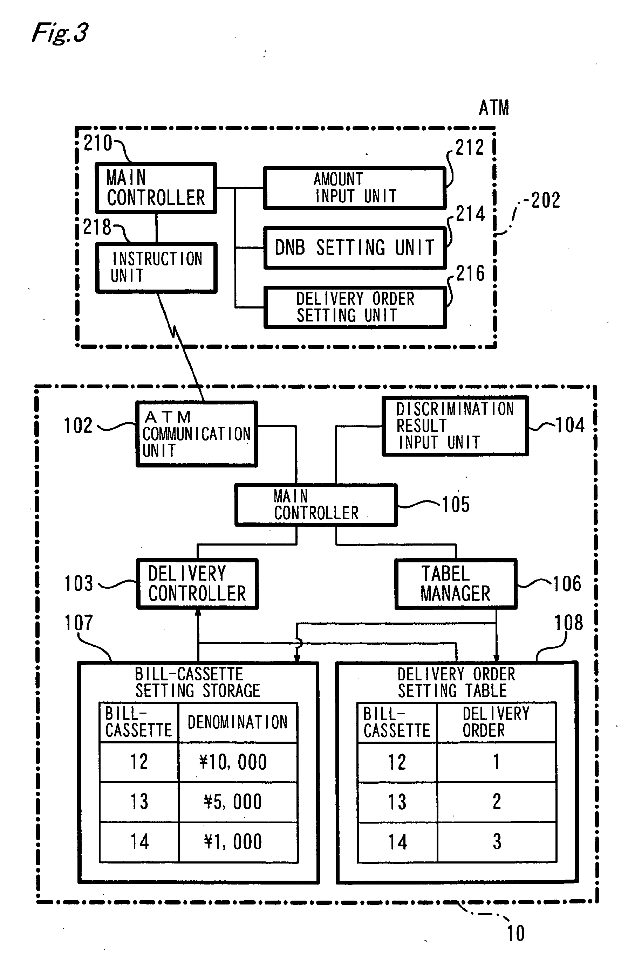

Figure 3 shows the control blocks of the ATM and the bill handling machine 10. Each functional block is implemented by software in the control unit 202 of the ATM and the control unit of the bill handling machine 10. Here, only the functional blocks related to a bill delivery process are shown.

The functional blocks in the ATM realises respective functions under the control of the main controller 210. The amount input unit 212 controls operation panel 203, and receives inputs for the amount of money to be withdrawn through the user's operation. DNB setting unit 214 sets the number of bills to be delivered with respect to each denomination based on the input amount of money. The denomination and the number of sheets are transmitted to the bill handling machine 10 as a withdrawal instruction through the instruction unit 218.

The bill handling machine 10 of this embodiment can change the setting on the delivery order of the bills as described later. The delivery order setting unit 216 installed in the ATM offers a user interfaces for the maintenance staff of the ATM to set the delivery order.

Each functional block in the bill handling machine 10 realises the functions under the control of the main controller 105.

ATM communication unit 102 transfers information to and from the instruction unit 218 of the ATM. For instance, the unit 102 transmits an instruction made on the operation panel 203 to the main controller 105, and a processing result in the bill handling machine 10 to the control unit 202. A discrimination result acquisition section 104 receives the discrimination result from the discrimination unit 3.

The delivery controller 103 delivers the bills according to the withdrawal instruction from the ATM. In this moment, the delivery controller 103 refers to the bill-cassette setting table 107 and the delivery order setting table 108. The bill-cassette setting table 107 stores information about the denomination stored in each bill-cassette. The content of the bill-cassette setting table 107 is illustrated in Figure 3. This table shows that \10,000 bill, \5,000 bill, and \1,000 bill are stored in bill-cassettes 12-14, respectively, in this embodiment. The delivery order setting table 108 defines the delivery order among the bill-cassettes. The content of the delivery order setting table 108 is also illustrated in Figure 3. This table shows that the delivery is to be performed in order of bill-cassettes 12, 13, and 14.

The contents of these tables are managed by the table manager 106. When the bill-cassettes 12-14 are set in the bill handling machine 10, the table manager 106 updates the bill-cassette setting table 107 accordingly. The denomination stored in each bill-cassette can be specified by various means, such as a switch or an ID chip which is installed in each bill-cassette to identify the denomination, or manual setting by the maintenance staff etc. The table manager 106 manages the bill-cassette setting table 107 based on the denomination acquired in these ways.

The delivery order setting table 108 is managed based on the instruction set by the delivery order setting unit 216 of the ATM. When the maintenance staff sets the delivery order among the bill-cassettes through the user interface offered by the delivery order setting unit 216, the table manager 106 revises the delivery order setting table 108. In this embodiment, the delivery order is set through the operation panel 203 of the ATM, but various ways can be taken for the setting. For instance, use of a user interface for the delivery order setting installed in the bill handling machine 10 is acceptable. Use of a personal computer and other external devices connected with the bill handling machine 10 with a cable is also acceptable.

### A4. Bill delivery process:

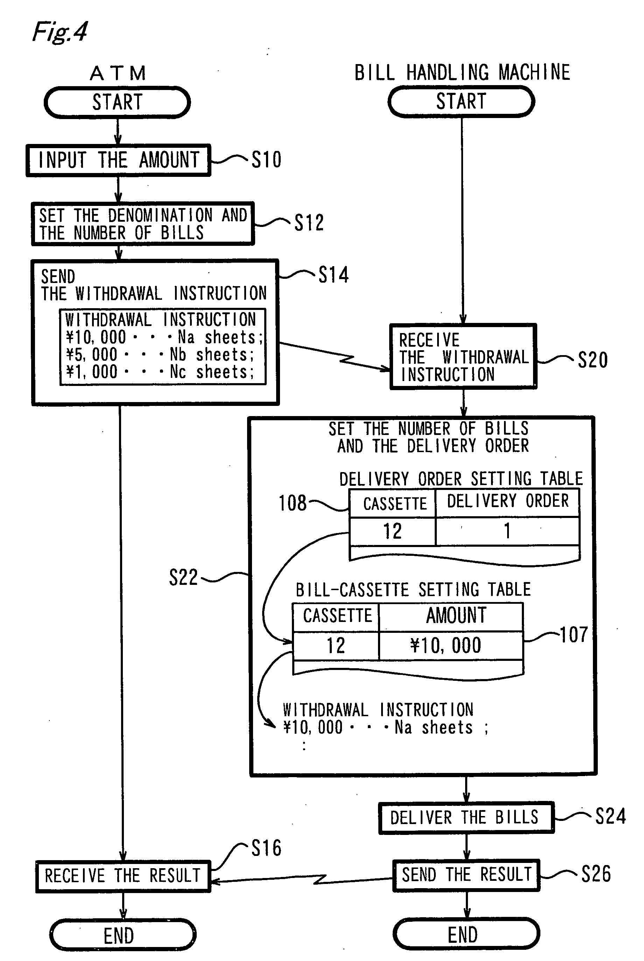

Figure 4 shows a flow chart of the bill delivery process. The processing of the control unit 202 of the ATM is shown at the left, and the processing of the control unit of the bill handling machine 10 is shown at the right. Hereafter the two control units are simply referred to as the ATM and the bill handling machine 10.

First of all, the ATM inputs the amount of money to be delivered (step S10). This amount is input by a user operation through the operation panel 203. The ATM sets the number of bills to be delivered with respect to each denomination based on this amount of money (step S12). The setting is possible by various well-known methods.

The ATM transmits a withdrawal instruction including the delivery setting to the bill handling machine 10 (step S14). The content of the withdrawal instruction is shown in Figure 4. The number of bills of each denomination is specified in the withdrawal instruction as shown in the figure. In this case, the instruction tells that Na sheets of \10,000 bills, Nb sheets of \5,000 bills, and Nc sheets of \1,000 bills are to be delivered. Alternatively, only the amount of money may be transmitted from the ATM as a withdrawal instruction, and the number of bills of each denomination may be determined by the bill handling machine 10.

The bill handling machine 10 receives this withdrawal instruction (step S20), and executes processing for setting a delivery order and the number of bills (step S22). The method for setting the delivery order is also shown in Figure 4. In this embodiment, the delivery order is set referring to three kinds of information: the delivery order setting table 108, the bill-cassette setting table 107, and the withdrawal instruction.

The bill handling machine 10 firstly refers to the delivery order setting table 108. This table stores the delivery order among the bill-cassettes as described before. The bill handling machine 10 specifies the bill-cassette for which the delivery order is set to "1" among these cassettes. In this case, the bill-cassette 12 is specified to have the first order. Next, the bill handling machine 10 specifies the denomination stored in the specified bill-cassette by referring to the bill-cassette setting table 107. In this example, it is specified that \10,000 bills are stored in the bill-cassette 12. Finally, the bill handling machine 10 specifies the number of bills to be delivered for the specified denomination based on the withdrawal instruction. In this example, 'Na sheets' is specified for the \10,000 bills.

Thus, the bill-cassette for the first delivery order and the number of bills are determined. In the same way, the bill handling machine 10 determines how many bills from which bill-cassette for the second ad third delivery order.

When the delivery order and the number of bills for each denomination instructed in the withdrawal instruction are set, the bill handling machine 10 extracts the bills according to the setting (step S24). The machine 10 delivers the bills to the insert-deliver opening 1 with the order while controlling the conveyer 2 and each gate shown in Figure 2. The bill handling machine 10 notifies the ATM of the result of the delivery (step S26). The ATM receives this result (step S16), and thus the bill delivery process is completed.

### A5. Effects of the Delivery Order Change:

The ATM including the bill handling machine 10 can flexibly set the delivery order of the bills by changing the delivery order setting table 108.

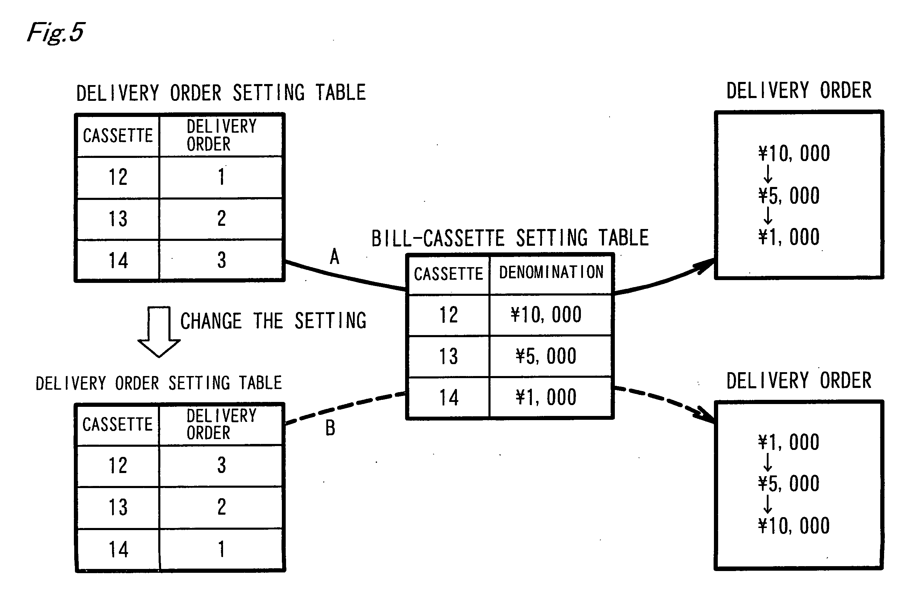

Figure 5 shows how to change the delivery order. The setting process of the delivery order shown in step S22 in Figure 4 is schematically shown here. The contents of the delivery order setting table are illustrated at the left side of the figure. The upper table shows an initial table content and the lower table shows a revised content. The delivery order of bill-cassettes 12, 13, and 14' is set at first. The setting is then changed to the order of 'bill-cassettes 14, 13, and 12'.

A bill-cassette setting table is illustrated at the centre of the figure. Bill-cassettes 12, 13, and 14 store \10,000, \5,000, and \1,000 bills, respectively. The bill-cassette setting table is changed when the denominations stored in the bill-cassettes are changed. However, no change of the denomination is assumed here.

When the initial delivery order setting table is used, the delivery order is decided according to a flow drawn by a solid arrow A in the figure. The deliver order of \10,000, \5,000, and \1,000 bills is set in this case. Actually, the number of bills to be delivered for each denomination is set according to the withdrawal instruction, but it is omitted here.

When the revised delivery order table is used, the delivery order is decided according to a flow drawn by a broken arrow B in the figure. The deliver order of \1,000, \5,000, and \10,000 bills is set in this case.

Thus, the delivery order can be easily changed by revising the setting of the delivery order setting table in the bill handling machine of this embodiment.

### A6. Modified system of the delivery order setting table:

In the previous embodiment, the delivery order of each bill-cassette is directly set by the delivery order setting table. The delivery order setting table may indirectly set the delivery order of each bill-cassette.

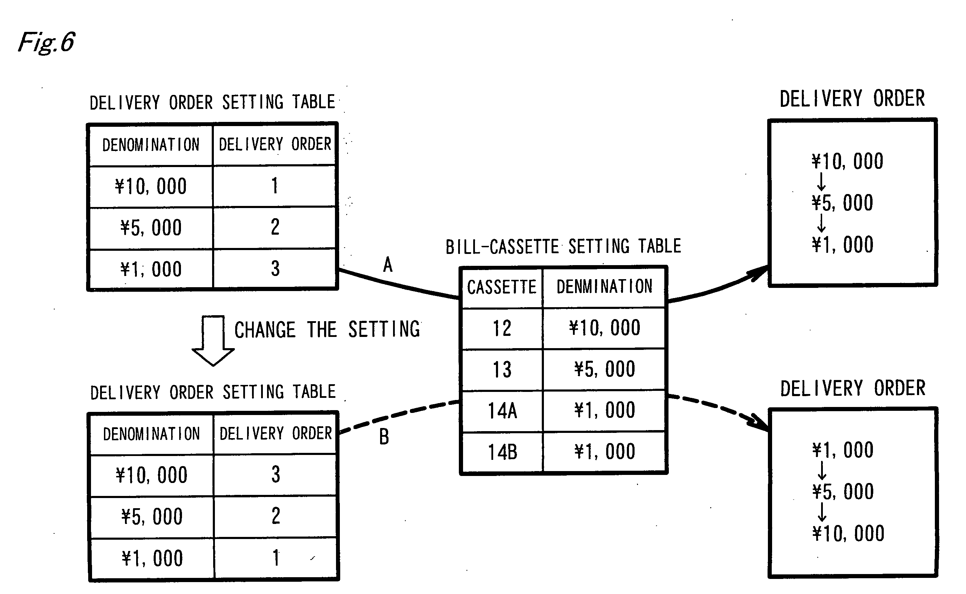

Figure 6 shows a modified system of the delivery order setting table. The tables and the resultant delivery order are illustrated in the same way as Figure 5. Bill-cassettes 12, 13, 14A and 14B are assumed to be installed in the bill handling machine. This doesn't mean the number of bill-cassettes is limited to four.

In the delivery order setting table of the modified system, the delivery order is set for the denominations, but not for the bill-cassettes. In the initial table, the delivery order of \10,000, \5,000, and \1,000 bills is set. In the revised table, the delivery order of \1,000, \5,000, and \10,000 bills is set.

When the initial delivery order setting table is used, the delivery order is decided according to a flow drawn by a solid arrow A in Figure 6. "\10,000 bill" is assigned the first delivery order based on the delivery order setting table, and it is specified that "\10,000 bills" are stored in the bill-cassette 12 based on the bill-cassette setting table. Thus, the bill-cassette 12 is determined to be the first bill-cassette for the bill extraction by referring to these two tables. The denomination and the bill-cassette of the second delivery order is set in the same way. When the revised table is used, the delivery order of the denomination and the bill-cassette is set in the same way as is the case with the initial table. Thus, the delivery order can be easily changed by revising or modifying the delivery order setting table.

Even when one denomination is separately stored in two or more bill-cassettes, the modified system can easily control the delivery order because the delivery order is specified with respect to the denominations but not the cassettes. For instance, suppose \1000 bill are stored in two bill-cassettes 14A and 14B as shown in Figure 6. In the previous embodiment (Figure 5), it is required to individually set the delivery order to these bill-cassettes. On the other hand, in the modified system, the delivery order of four bill-cassettes 12, 13, 14A and 14B are not individually set because the delivery order is set for the denominations.

As for the delivery order of bill-cassettes 14A and 14B where same denomination is stored, various handling is possible. For instance, random delivery or random extraction is acceptable without any priority between these two cassettes. In another example, the priority may be set such that bills will be extracted from the bill-cassette 14A first, and then from the bill-cassette 14B after the bill-cassette 14A becomes empty. In still another example, a higher priory may be set to the one of the bill-cassettes 14A and 14B that has a higher number of remaining bills. As for the determination of the delivery priority of two or more cassettes for the same denomination, various other ways are also acceptable, and it is not limited to the above examples.

### A7. Bill Detection Process:

The previous embodiment describes the bill delivery process where the required bills are simply extracted and delivered according to the specified order (step S24 in Figure 4). It should be noted that the bills pass through the discrimination unit 3 in the delivery process as shown in Figure 2. This discrimination unit 3 may be used to confirm the denomination of the bills as follows.

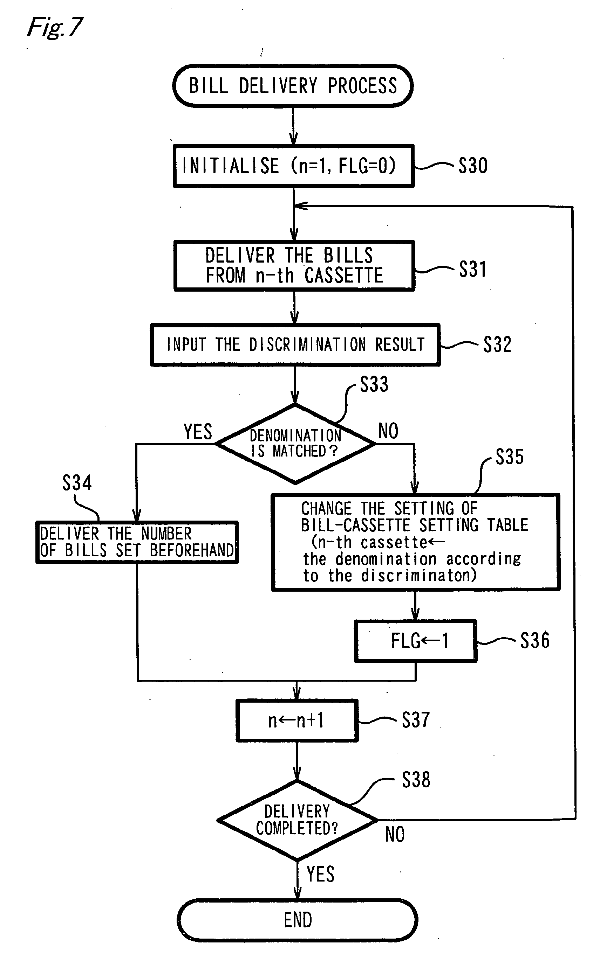

Figure 7 shows a flow chart of the modified bill delivery process. This process can be substituted for the process of step S24 in Figure 4. Therefore, at the start of this processing, the bill-cassette, the denomination, and the number of bills to be delivered are already set.

In the bill delivery process, the bill handling machine 10 substitutes 1 for variable n, and 0 for variable FLG as initialisation(step S30). Variable n shows the delivery order of the bill-cassette concerned with the process. Variable FLG takes 0 when no irregular is detected in the delivery, and takes 1 when an irregular is detected.

After initialisation is completed, the bill handling machine 10 extracts bills from the n-th bill-cassette (step S31). With n=1 at this moment, the bills are extracted from the bill-cassette whose delivery order is set to "1" in the delivery order setting table. As explained with reference to Figure 4, the denomination and the number of bills to be delivered are already determined by the bill handling machine 10 at this moment.

The bill handling machine 10 receives the discrimination result from the discrimination unit 3 during this delivery (step S32). It should be noted that the denomination is one of various discriminations obtained by the discrimination unit 3.

The bill handling machine 10 judges the consistency between the denomination obtained from the discrimination result and the denomination to be delivered (step S33), and proceeds the delivery the required number of bills when they are matched (step S34). After completing the delivery of required number of bills from n-th bill-cassette, the bill handling machine 10 increments n by 1 (step S37) and judges whether another bill-cassette is to be used for the delivery. For instance, when the variable n is larger than the total number of the bill-cassettes (step S38), the bill delivery process is judged complete.

On the other hand, when the denomination obtained from the discrimination result and the denomination to be delivered are inconsistent (step S33), it is judged that the bill-cassette setting table includes wrong setting. Then, the bill handling machine 10 executes a table restoration process to correct the setting of the bill-cassette setting table based on the discrimination result (step S35). In other words, the denomination corresponding to n-th bill-cassette is changed to the denomination obtained from the discrimination result in the bill-cassette setting table.

An example of this processing below will be readily understood with reference to step S22 of Figure 4. The bill-cassette setting table illustrated in Figure 4 shows that \10,000 bills are stored in the bill-cassette 12 from which the delivery is to be done first. Under such a condition, if the discrimination result shows that \1,000 bill is delivered from the first bill-cassette 12, that means the denomination set for the bill-cassette 12 should be \1,000 in the bill-cassette setting table. Therefore, the setting of the bill-cassette setting table is corrected by changing it to the denomination obtained from the discrimination result.

After correcting the bill-cassette setting table (step S36), the bill handling machine 10 substitutes 1 for variable FLG to indicate that some irregularity is detected during the delivery (step S35 in Figure 7) . Afterwards, the bill handling machine 10 increments variable n by 1 (step S37), and proceeds to succeeding bill delivery process for another bill-cassette until the process for all the bill-cassettes is completed (step S38). Since the process proceeds to succeeding process for another bill-cassette even when some irregularity is detected, the setting of the bill-cassette setting table is confirmed with respect to all bill-cassettes, and corrected when necessary. Alternatively, the bill delivery process may be stopped when some irregularity is detected.

The bill handling machine shifts to the process at step S26 shown in Figure 4 after the bill delivery process shown in Figure 7 is completed. At this moment, the value 0 of the variable FLG indicates that no irregularity is detected, so the bill delivery process is finished after notification of the result in the same way as the previous embodiment (step S26 and S16).

On the other hand, when the value of the variable FLG is 1, various processing is acceptable. The process may be stopped because this value 0 of the variable FLG means that there is some irregularity during the bill delivery process. In this case, it is preferable to display "error" on the operation panel 203 of the ATM. In another example, the bill handling machine may re-execute the process from step S22. With the bill-cassette setting table being corrected in the previous process, proper delivery can be done during reprocessing from step S22 in the modification of the bill delivery process (Figure 7).

Wrong delivery can be prevented by the discrimination of the bill to be delivered in the above-mentioned modification of the bill delivery process. In addition, when the processing shown in Figure 7 is applied, the load required for the restoration of the whole system can be reduced because the wrong setting is automatically corrected.

### A8. Automatic Setting of the Delivery Order:

In the embodiment and the modification described above, a maintenance staff manually sets the delivery order setting table 108 for each bill-cassette or each denomination. In another modification, the bill handling machine 10 may automatically set the delivery order.

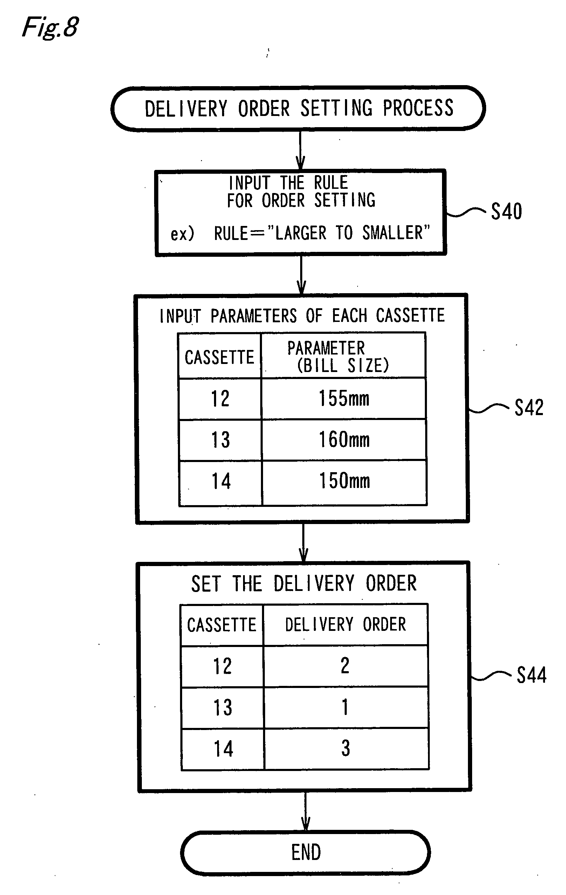

Figure 8 shows a flow chart of the delivery order setting process. This is a pre-process for the bill handling machine 10 to execute prior to the bill delivery process, and the substitution of the manual setting of the delivery order setting table 108 by the maintenance staff.

In this process, the bill handling machine 10 inputs the rule for setting the delivery order, instead of the order itself through the operation of the maintenance staff (step S40). For instance, the rule may be based on bill size or denomination. The rule of "larger to smaller" in size is illustrated in Figure 8.

Next, the bill handling machine 10 acquires a particular parameter associated to the bills stored in each bill-cassette (step S42). This parameter is what is used in the rule input in step S40. For instance, the bill size can be the parameter when the rule is based on the bill size as illustrated in Figure 8. Width of the bill may be selected as the parameter, and various other parameters are also acceptable.

The value of the parameter can be acquired in various ways. In one example, a maintenance staff may individually input the value. In another example, the bill-cassette setting table may store the parameter values as well as the denomination. In still another example, the value can be acquired from the discrimination unit 3 based on the denomination stored in the bill-cassette setting table. In further example, the value can be acquired from the discrimination result obtained from the discrimination unit during bill transportation to or from each bill-cassette.

The bill handling machine 10 determines the delivery order of each bill-cassette through applying the rule based on the value thus obtained (step S44). In the example in Figure 8, the bills are delivered in order of larger to smaller, so the delivery order is set in order of bill-cassettes 13, 12, and 14.

When the rule is based on denomination, the delivery order can be determined in the same way as that for the above rule based on the bill size. Both ascent order and descent order are acceptable.

The delivery order setting process may be executed every time when the bill delivery process is to be performed. This enables the delivery order to be determined at each bill delivery process based on "the required number of bills for each denomination", for example. For instance, suppose the rule is "the descent order of the required number of bills for each denomination": the delivery is done from \10,000 bills when the required number of \10,000 bills is larger than that of any other bills; and the deliver is done from \1,000 bills when the required number of \1,000 bills is larger than that of any other bills.

An automatic setting of the delivery order described above can achieve the required delivery by simply setting the rule for the delivery order without setting the delivery order setting table itself. As a result, the load for setting the delivery order setting table can be reduced.

### B. The second embodiment:

### B1. Control block:

In the first embodiment, the bill handling machine 10 uses the delivery order setting table to determine the delivery order, and the ATM controller, an upstream or master device of the machine 10, only specifies the amount of money to be delivered without instructing the delivery order. In the second embodiment, the ATM controller determines the delivery order instead.

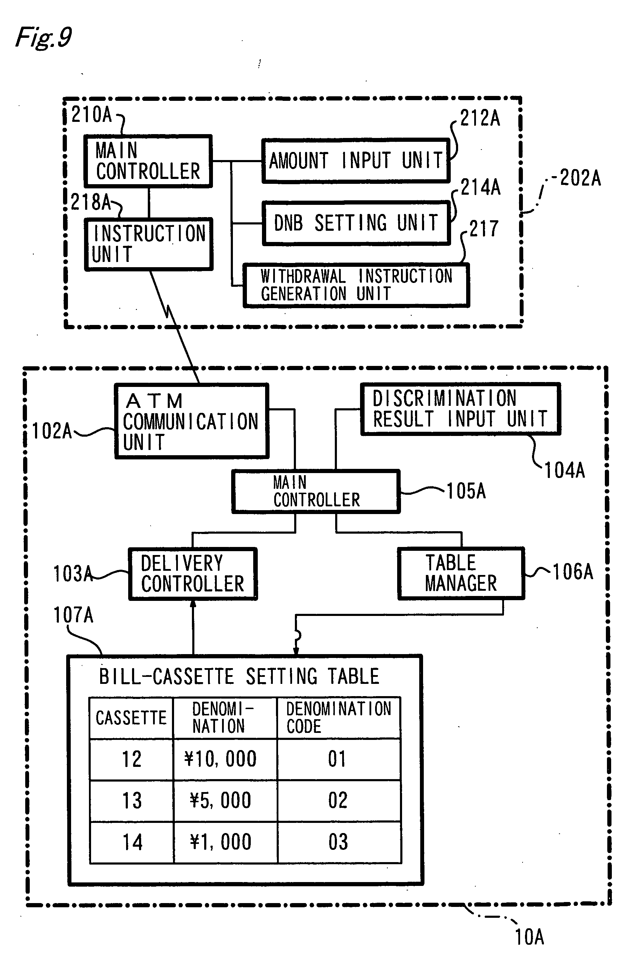

Figure 9 shows the control block of the ATM and the bill handling machine in the second embodiment. The bill handling machine 10A differs from that of the first embodiment in that the delivery order setting table 108 is not installed. The bill-cassette setting table 107A stores the denomination of each bill-cassette as is the case with the first embodiment. In the second embodiment, each denomination is assigned with a denomination code to simplify the withdrawal instruction. In this example, a denomination code "01" means \10,000, "02" means \5,000, and "03" means \1,000. While both the denomination and the denomination code are stored in the bill-cassette setting table 107A, only one of them may be stored. In the latter case, it is necessary to prepare another table which associates the denomination and the denomination code separately from the bill-cassette setting table 107A. This denomination code is applicable also in the first embodiment. Units 102A, 105A, 104A, 103A, and 106A have the same functions as the corresponding units in the first embodiment, so the explanation for these units are omitted.

A withdrawal instruction generation unit 217 is installed, instead of the delivery order setting unit 216, in the control unit 202A of the ATM. Withdrawal instruction generation unit 217 generates a withdrawal instruction which specifies one or more denominations, the required number of bills for each denomination, and the delivery order of each denomination, which are all associated with one another. It should be noted here that the withdrawal instruction in the second embodiment includes the delivery order while the withdrawal instruction in the first embodiment doesn't include that information. The delivery order is preset to the withdrawal instruction generation unit 217 through operation of a maintenance staff. In this case, the withdrawal instruction generation unit 217 functions as an input unit of the setting for the delivery order.

### B2. Bill delivery process:

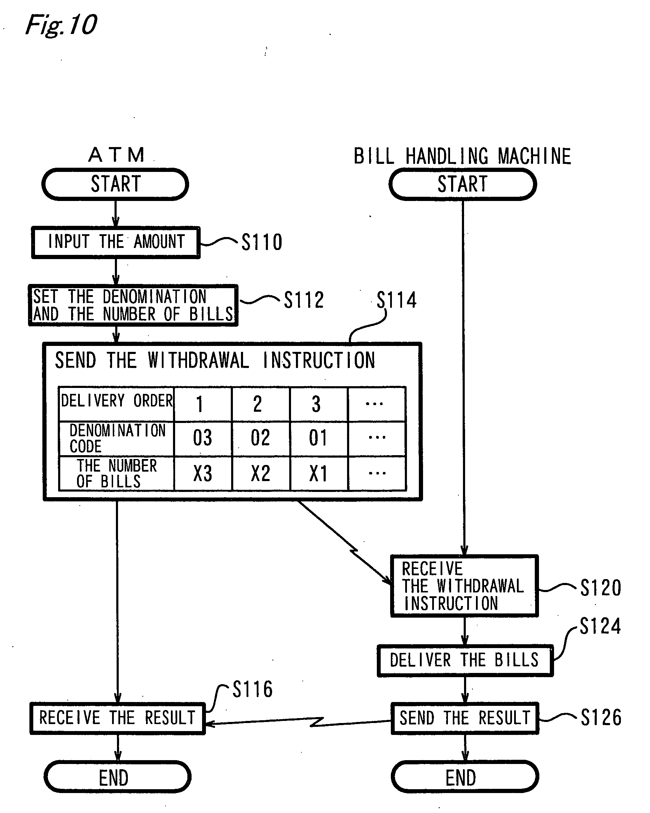

Figure 10 shows a flow chart of the bill delivery process in the second embodiment. The process of the ATM is shown left and the process of the bill handling machine 10A is shown right.

First of all, the ATM inputs the amount of money to be delivered (step S110), and sets the denomination and the number of bills (step S112). These process are the same as the bill delivery process in the first embodiment (Figure 4).

Next, the ATM generates a withdrawal instruction based on the input information, and transmits it to the bill handling machine 10A (step S114). The example of the withdrawal instruction is shown in the figure. In the second embodiment, the withdrawal instruction specifies the denomination code and the number of bills according to the delivery order. In the example in the figure, it is instructed that the X3 sheets of bills corresponding to the denomination code "03" is to be delivered at first. The relation between the delivery order and the denomination code is set to the ATM in advance. In this sense, an equivalence of the modified system of the delivery order setting table of the first embodiment (Figure 6) is provided within the ATM controller in the second embodiment.

The bill handling machine 10A receives this withdrawal instruction (step S120), and delivers the bills (step S124). While the bill handling machine 10A determines the delivery order based on the withdrawal instruction in the first embodiment (step S22 in Figure 4), this processing is omitted in the second embodiment because the withdrawal instruction already includes the delivery order. The bill handling machine 10A specifies the bill-cassette corresponding to the denomination code by referring to the bill-cassette setting table 107A, and delivers the specified number of bills. According to the withdrawal instruction in Figure 10, delivery is carried out in order of the denomination code "03 (\1,000 bill)", "02 (\5,000 bill)", and "01 (\10,000 bill)". The results are transferred between the bill handling machine 10A and the ATM after the delivery of bills is completed (S126, S116) and the bill delivery process is finished.

Since the delivery order is included in the withdrawal instruction supplied from the ATM controller, the bill handling machine 10A in the second embodiment can easily change the delivery order based on the setting of the withdrawal instruction. For instance, when the denomination code "01 (\10,000 bill)" is set to the first delivery order as shown in the Figure 10, the delivery order can be changed so that the \10,000 bill is delivered first.

The second embodiment is advantageous in that the delivery order can be determined by the upstream device, or the ATM controller, of the bill handling machine. The ATM controller, is easier for the maintenance staff to set and adjust than the bill handling machine 10A. Therefore, there is an advantage that the delivery order can be comparatively easily changed in the second embodiment.

The automatic setting of the bill detection process and the delivery order (Figure 7, 8) explained in the first embodiment (Figure 7) can be also applied in the second embodiment. The bill handling machine 10A can execute the bill detection process in the same manner as in the first embodiment. The automatic setting of the delivery order can be executed in the ATM in the way described in the first embodiment. Parameters necessary for the automatic setting of the delivery order may be input by the maintenance staff, or alternatively the ATM controller may inquire of the bill handling machine 10A about the parameters.

The above embodiments and their modifications are to be considered in all aspects as illustrative and not restrictive. There may be many modifications, changes, and alterations without departing from the scope or spirit of the main characteristics of the present invention. All changes within the meaning and range of equivalency of the claims are therefore intended to be embraced therein. For example, the series of control processes discussed above may be attained by the hardware construction, instead of the software configuration.

The scope and spirit of the present invention are indicated by the appended claims, rather than by the foregoing description. According to the bill handling machine of this invention, the delivery order of bills can be changed flexibly because the relation between the delivery order and the bill-cassettes can be set using a device external to the bill delivery machine.

## Claims

1. A bill handling machine for delivering bills comprising;
a plurality of bill-cassettes each configured to store bills of same denomination;
a bill-cassette setting memory configured to store a bill-cassette setting relating denominations to the bill-cassettes;
a delivery order setting unit configured to receive an external command or operation and set a relation between the bill-cassettes and a delivery order of bills through the external command or operation;
a withdrawal instruction input unit configured to receive an input of a withdrawal instruction; and
a delivery controller configured to execute delivery of bills according to the withdrawal instruction and the relation between the bill-cassettes and the delivery order of bills.

2. The machine of claim 1, wherein
the relation between the bill-cassettes and the delivery order of bills is defined by a delivery denomination setting which relates the delivery order to the denominations; and
the delivery denomination setting can be set in the delivery order setting unit through an external command or operation.

3. The machine of claim 1, wherein the delivery order setting unit comprises:
a rule setting unit configured to set a rule for determining the delivery order based on a predetermined parameter related to bills;
a parameter acquisition unit configured to acquire the parameter with respect to each bill-cassette; and
a relation generation unit configured to generate the relation between the bill-cassettes and the delivery order of bills based on the rule.

4. The machine of claim 3, wherein the parameter has denomination or size of bill.

5. The machine of claim 3, further comprising a discrimination unit configured to discriminate bills, wherein the parameter acquisition unit acquires the parameter from the discrimination unit.

6. A bill handling machine which delivers bills comprising;
a plural bill-cassettes configured to store bills of each denomination;
a bill-cassette setting storage configured to store a bill-cassette setting relating each denomination to one of the bill-cassettes;
a withdrawal instruction input unit configured to input a withdrawal instruction which instructs the denomination and the number of bills to be withdrawn associated to its delivery order;
a delivery controller configured to execute the delivery of the bills based on the relation according to the withdrawal instruction.

7. The machine of claim 1 or 6 comprising:
a discrimination unit configured to discriminate the bill; and
a detection unit configured to detect an inconsistency between the withdrawal instruction and an actual delivery based on the result of the discrimination.

8. The machine of claim 7 comprising a correction unit configured to adjust the bill-cassette setting such that the bill-cassette delivering the inconsistent bill is associated to the denomination of the bill.

9. A teller machine executing transactions of bills by controlling a bill handling machine which delivers bills according to an instruction which instructs denomination and the number of bills to be withdrawn associated with a delivery order of bills, the teller machine comprising:
an amount input unit configured to receive an input of an amount of money to be withdrawn;
a bill setting unit configured to set the denomination and the number of bills to be withdrawn based on the withdrawal amount; and
an instruction unit configured to instruct the bill handling machine to deliver the denomination and the number of bills to be withdrawn associated with a delivery order of bills.

10. A control method of controlling delivery of bills in a bill handling machine for dispensing bills, the control method comprising the steps of:
storing a bill-cassette setting which relates denominations to bill-cassettes each storing bills of same denomination;
receiving a setting of a relation between the bill-cassettes and a delivery order of bills through an external command or operation;
inputting a withdrawal instruction which instructs bills to be withdrawn; and
delivering bills according to the withdrawal instruction and the relation between the bill-cassettes and the delivery order of bills.

11. A control method to control delivery of bills in a bill handling machine which dispenses bills, the control method comprising the steps of:
storing a bill-cassette setting which relates each denomination to one of bill-cassettes storing bills of each denomination;
inputting a withdrawal instruction which instructs which instructs the denomination and the number of bills to be withdrawn associated to its delivery order; and
delivering the bills based on the relation according to the withdrawal instruction.

12. A computer readable medium on which a computer program is stored, the computer program causing a computer to control delivery of bills in a bill handling machine and to effect the functions of:
storing a bill-cassette setting which relates each denomination to one of bill-cassettes storing bills of each denomination;
inputting a setting of a relation between the bill-cassettes and a delivery order of the bills through an external command or operation;
inputting a withdrawal instruction which instructs the bills to be withdrawn; and
controlling the delivery of the bills based on the relation according to the withdrawal instruction.

13. A computer readable recording media in which a computer program is stored, the computer program causing a computer to control delivery of bills in a bill handling machine and to execute the functions of:
storing a bill-cassette setting which relates each denomination to one of bill-cassettes storing bills of each denomination;
inputting a withdrawal instruction which instructs which instructs the denomination and the number of bills to be withdrawn associated to its delivery order; and
controlling the delivery of the bills based on the relation according to the withdrawal instruction.
